# EUROPEAN PATENT APPLICATION

(11) **EP 4 343 197 A1**
(43) Date of publication of application: **27.03.2024**
(21) Application number: 23197294.4
(22) Date of filing: 14.09.2023
(51) Int. Cl.: F17C 5/00, F17C 5/06

(54) **SAFETY JOINT HOUSING DEVICE**

(30) Priority: 21.09.2022 JP 2022149686
(71) Applicant: Tatsuno Corporation, Tokyo 108-0073 (JP)
(72) Inventor: TAKEZAWA, Masahiro, Tokyo, 108-0073 (JP); TSUGUMI, Yoshitaka, Tokyo, 108-0073 (JP); OTO, Yoshimi, Tokyo, 108-0073 (JP); OUCHI, Toshihiko, Tokyo, 108-0073 (JP)
(74) Representative: Isarpatent

(57) **Abstract**

[OBJECT] To provide a safety joint housing device for preventing a plug of a safety joint or a filling hose from being locked in a lower opening of a casing when the safety joint separates, thereby preventing a filling device from falling over and being damaged.

[SOLUTION] A safety joint housing device 100 according to the present invention houses a safety joint 101 including a plug 10 connected to a filling hose 61 and a socket 20 provided in a filling device 200, the plug 10 and the socket 20 separating from each other when a tensile load exceeding a predetermined level is applied, the safety joint housing device 100 including: a casing 320; a substrate 80 attached to the casing 320 on a main body side of the filling device 200; and a member 30 that is provided at a lower opening 320A of the casing 320 and deforms when in contact with the plug 10 or the filling hose 61.

## Description

### Field of the Invention

The present invention relates to a safety joint housing device for housing a safety joint, which is used in a filling device for filling gas such as hydrogen gas used as fuel, having a function of separating the filling device and a filling hose in an emergency.

### Description of the Related Art

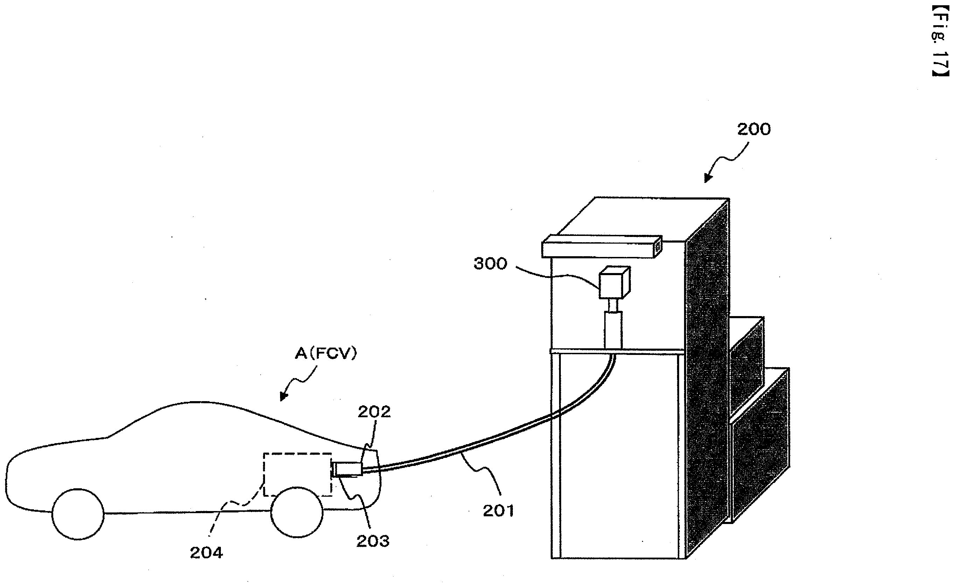

In a vehicle A (for example, a fuel cell vehicle, FCV) that runs on hydrogen as a fuel, as shown in Fig. 17, hydrogen gas is filled by connecting a filling nozzle 202 provided at a tip of a filling hose 201 and a filling port 203 mounted to the vehicle A in a hydrogen filling facility. Although it is an extremely rare case, there is a case where the vehicle A starts moving for some reason without a worker who is doing a hydrogen filling operation being aware of it. Similarly, although it is an extremely rare case, there is a case where another vehicle collides with the vehicle A that is being filled with hydrogen without a worker who is doing a hydrogen filling operation being aware of it. In such cases, the filling hose 201 will be pulled, the filling device 200 will overturn and break, and a flammable hydrogen gas will spout out, resulting in a dangerous situation. In order to avoid such situations, a safety joint 300 for emergency release is provided in a region between the filling device 200 and the filling hose 201, and the safety joint 300 separates when a tensile load of a predetermined level or over acts on the filling hose 201. Thus, the filling device 200 is prevented from being damaged. Separation of the safety joint 300 is an extremely rare event and does not occur on a daily basis.

Even if the filling hose 201 is not subjected to a tensile load of a certain level or above, when the filling hose 201 swings, the moment due to the swinging is applied to a filling hose mounting portion of a vehicle-side member (plug) of the safety joint 300. There is a risk that the mounting portion will be damaged and a hydrogen gas will leak from the damaged portion. In response to this, the applicant has proposed a measure to prevent the plug of the safety joint 300 from being damaged by the moment caused by the swinging motion of the filling hose 201 (see JP-B-6590159 gazette).

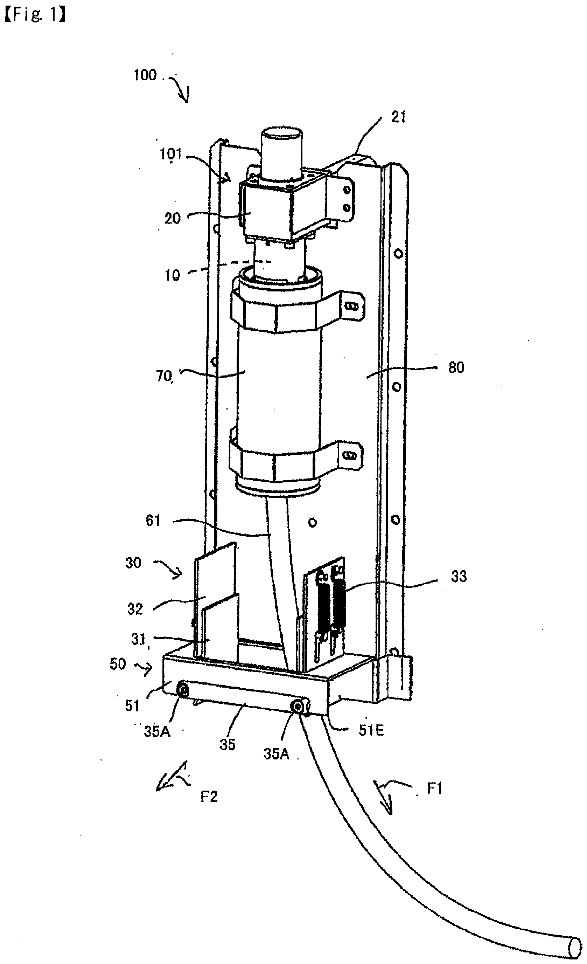

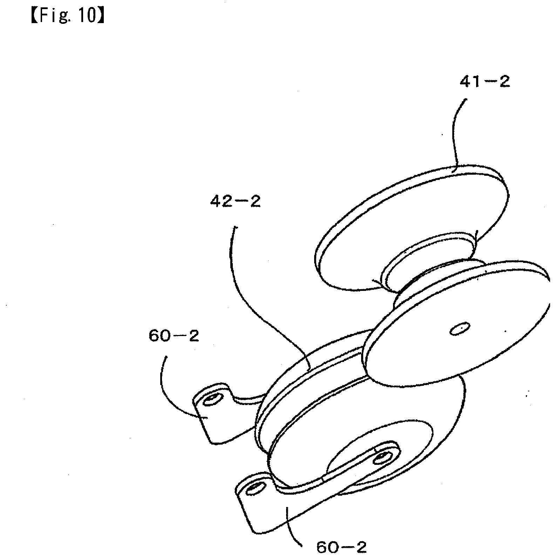

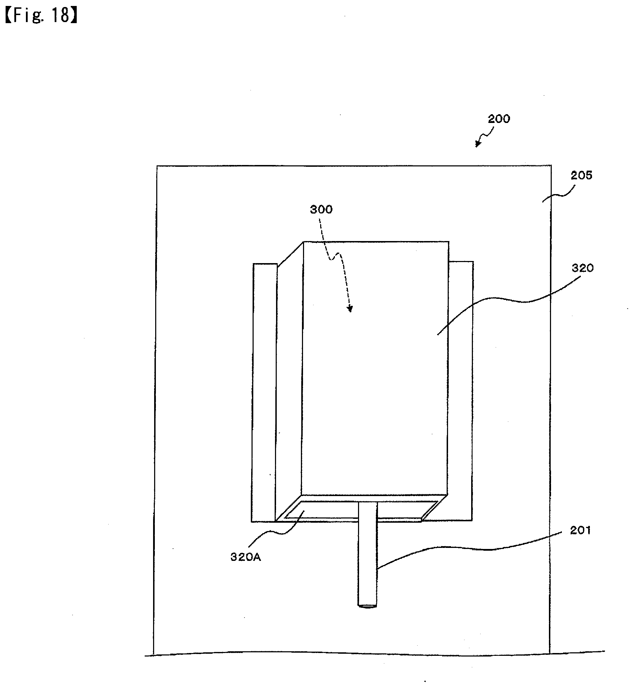

In Fig. 18, the safety joint 300 described above (indicated only by the dashed lead line in Fig. 10) is built in a casing 320 of the filling device 200. Reference numeral 205 indicates an element of the casing of the hydrogen filling device. The safety joint 300 includes a plug (a member on the vehicle A side of the safety joint, refer to Fig. 1, not shown in Fig. 18) 10 connected to the filling hose 201, and a socket 20 (refer to Fig. 1, not shown in Fig. 18) that is a member on the hydrogen filling device side, and the plug separates from the socket (the safety joint 300 separates) when a tensile load greater than or equal to a predetermined value acts. In the above conventional art, when the safety joint 300 separates, the filling hose 201 and the plug coupled thereto pass a hollow portion of a guide member 70 (refer to Fig. 1, not shown in Fig. 18) and escape from a lower opening 320A of the casing 320.

When the vehicle A unexpectedly starts or moves, however, the force pulling the hydrogen filling hose 201 acts horizontally not vertically, which may cause the plug to be caught (locked) in the lower opening 320A. If the plug locks in the lower opening 320A, the force of the vehicle pulling the filling hose 201 will be transmitted to the hydrogen filling device via the locking point, which may cause the hydrogen filling device to overturn.

In addition, since an infrared fiber, a mesh, etc. are arranged around an outer periphery of the filling hose 201, and a cover of the filling hose 201 is also present, the filling hose 201 more likely to lock (get caught) with the lower opening 320A of the casing 320. That is, in addition to the plug at a tip of the filling hose 201 being locked to the lower opening 320A, there is a possibility that the filling hose 201 will be locked to the lower opening 320A. For this reason, even if the safety joint 300 separates when the vehicle A unexpectedly starts or moves, there is a risk that the filling hose 201 is get caught with the lower opening 320A, the vehicle pulls the hydrogen filling device 200, and overturns and damages the hydrogen filling device 200. The conventional art described above is not intended to deal with such a situation.

The content of JP-B-6590159 gazette is incorporated herein by reference in its entirety.

### SUMMARY OF THE INVENTION

### Problems to be Solved by the Invention

The present invention has been proposed in view of the above-mentioned problems of the prior art, and the object thereof is to provide a safety joint housing device for preventing the plug of the safety joint or the filling hose from being locked in the lower opening of the casing when the safety joint separates, thereby preventing the filling device from falling over and being damaged.

A safety joint housing device 100 according to the present invention for housing a safety joint 101 including a plug 10 connected to a filling hose 61 and a socket 20 provided in a filling device 200, the plug 10 and the socket 20 separating from each other when a tensile load exceeding a predetermined level is applied, the safety joint housing device 100 including: a casing 320; a substrate 80 attached to the casing 320 on a main body side of the filling device 200; and a member 30 that is provided at a lower opening 320A of the casing 320 and deforms when in contact with the plug 10 or the filling hose 61.

It is preferable that in the safety joint housing device 100 the deformable member 30 includes two pairs of first and second plate members 31, 32, the first plate member 31 positioned inside the second plate member 32; an elastic member 33 is provided to allow the first plate member 31 to move relative to the second plate member 32, and after the relative movement, the elastic member 33 allows the first plate member 31 to be restored to a position parallel to the second plate member 32; the second plate member 32 is fixed to a support mechanism 50 that supports the deformable member 30 on the casing, and the second plate member 32 is formed with a long hole 32A extending in its longitudinal direction and a projection 32B projecting outward; a projection 31A protruding outward is formed on the first plate member 31, and the projection 31A of the first plate member 31 penetrates the long hole 32A of the second plate member 32; and the elastic member 33 connects the projections 31A, 32B of the first and second plate members 31, 32.

A safety joint housing device 100-1 according to the present invention for housing a safety joint 101 including a plug 10 connected to a filling hose 61 and a socket 20 provided in a filling device 200, the plug 10 and the socket 20 separating from each other when a tensile load exceeding a predetermined level is applied, the safety joint housing device 100-1 including: a casing 320; a substrate 80 attached to the casing 320 on a main body side of the filling device 200; and a plurality of rotatable members (40, rollers), relative positions of the rotatable members 40 being changeable.

In the safety joint housing device, it is preferable that the plurality of rotatable members (40, rollers) includes two Japanese hand drum-shaped rotors 41, 42 with a large diameter at both ends of a central shaft (rotating shaft) and a small diameter at a center of the central shaft, one 41 of the rotors rotatably mounted on the substrate 80 of the casing, the other rotor 42 is provided on a front side (side away from the substrate 80) of the casing, and its central axis is rotatably supported on one end 60A of an L-shaped member 60, the other end 60B is rotatably supported, and rotation of the L-shaped member 60 around the other end changes the distance between the one rotor 41 and the other rotor 42.

In the safety joint housing device, it is preferable that the plurality of rotatable members (40, rollers) includes a Japanese hand drum-shaped rotor 41-1 (or 41-2) having a large diameter at both ends of a central shaft (rotating shaft) and a small diameter at a center of the central shaft, and a rotor 42-1 (or 42-2) having a small diameter at both ends of a central shaft (rotating shaft) and having a large diameter at a center of the central shaft, one 41-1 (or 41-2) of the rotors rotatably mounted on the substrate 80 of the casing, the other rotor 42-1 (or 42-2) is provided on a front side (side away from the substrate 80) of the casing, its central axis is rotatably supported on one end 60A of an L-shaped member 60, the other end 60B is rotatably supported, and rotation of the L-shaped member 60 around the other end changes the distance between the one rotor 41-1 (or 41-2), 42-1 and the other rotor 42-1 (or 42-2), a gap 4S-1 (or 4S-2) is formed when the one rotor 41-1 (or 41-2) and the other rotor 42-1 (or 42-2) come closest to each other, and the gap 4S-1 (or 4S-2) has the same width or diameter as the diameter of the filling hose 61.

Further, it is preferable that the plurality of rotatable members 40 includes two rotatable members 43, 44, the two rotatable members 43, 44 being connected at their axial ends and the connected ends being rotatable (through a hinge HG for instance) relative to each other. The plurality of rotatable members preferably includes three rotatable members 45, 46, 47, the rotatable member 45 fixed to the substrate and the other two rotatable members 46, 47 are connected at their respective ends so as to be relatively rotatable (through a hinge HG for instance).

### EFFECTS OF THE INVENTION

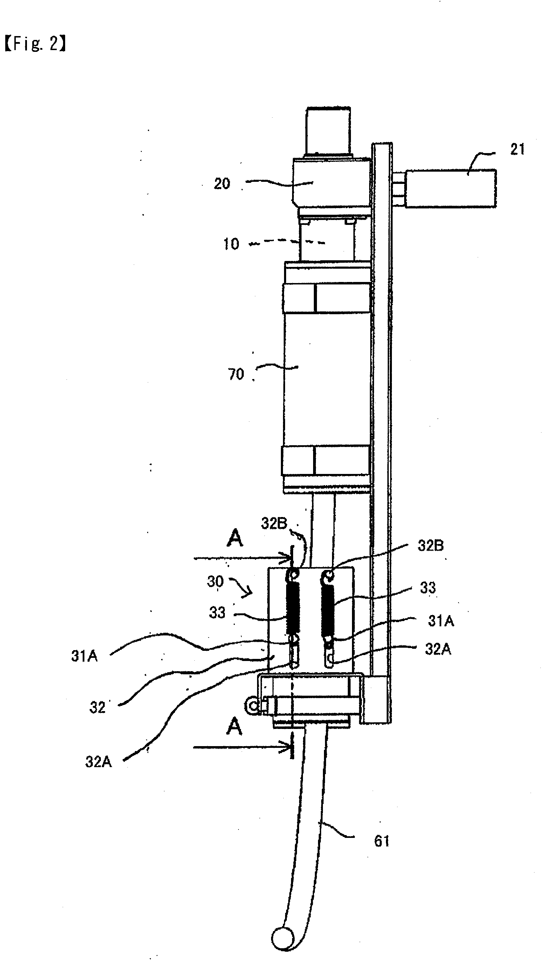

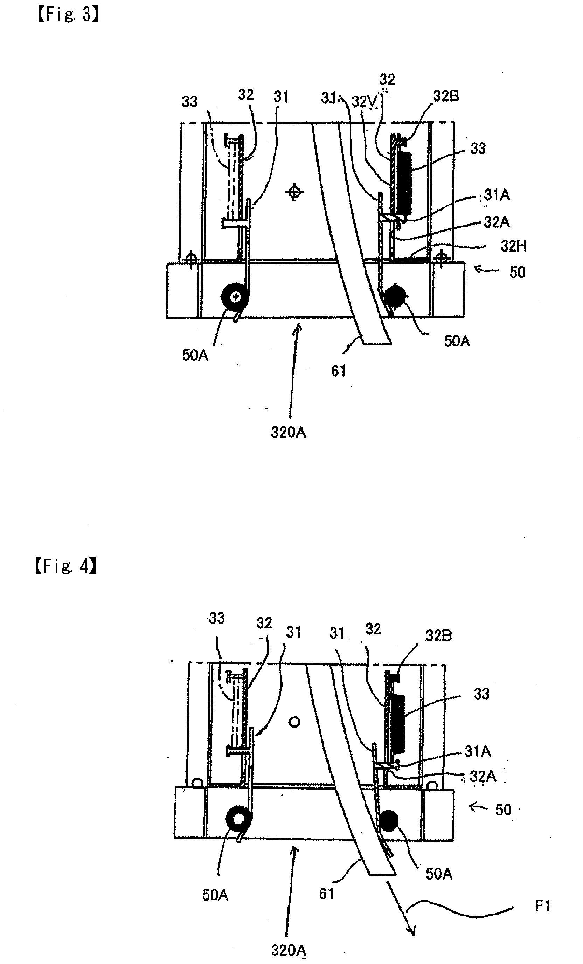

With the safety joint housing device with the above construction according to the present invention, since the plug 10 and the socket 20 have a function of separating when a tensile load exceeding a predetermined value is applied, even if a fuel cell vehicle (vehicle A) is started during a hydrogen filling operation, the plug 10 and the socket 20 will separate, and the tensile force of the filling hose 61 does not act on a main body of the hydrogen filling device. After that, when the filling hose 61 or the plug 10 at its tip contacts the deformable member 30 at a lower opening (320A: Figs. 3, 4 and 18), the deformable member 30 deforms, and the plug 10 and the filling hose 61 can move to a position where engagement with the deformable member 30 is released (no longer caught). Therefore, even if the plug 10 or the filling hose 61 is engaged (caught) in the lower opening 320A of the casing 320 (vehicle A side of the filling hose 61: the lower side in Figs. 1 and 2), the engagement state (caught state) is immediately released, and the hydrogen filling device main body is prevented from being pulled.

Here, the deformable member 30 includes two pairs of first and second plate members 31 and 32, the first plate member 31 is positioned inside the second plate member 32, and the second plate member 32 is fixed to the support mechanism 50 that supports the deformable member 30 to the casing. The second plate member 32 is formed with a groove 32A extending in its longitudinal direction and a projection 32B projecting outward. The first plate member 31 is formed with a projection 31A projecting outwardly through a long hole 32A of the second plate member 32, and the projections 31A and 32B of the first and second plate members 31 and 32 are connected through elastic members 33. The elastic member 33 has a function of allowing the first plate member 31 to move relative to the second plate member 32 and restoring the first plate member 31 to a position parallel to the second plate member 32 after the relative movement. Therefore, even if the plug 10 or the filling hose 61 engages (gets hooked on) the first plate member of the lower opening 320A of the casing 320, the first plate member 31 moves to the position where the engagement state (hooked state) is released (from the hooked state), the engaged state (hooked state) is released and no tensile force acts on the main body of the hydrogen filling device.

In the present invention, the plurality of rotatable members 40 may be composed of two Japanese hand drum-shaped rotors 41 (41-1, 41-2) and (42, 42-1, 42-2), each of which has a large diameter at both ends of a central shaft (rotating shaft) and a small diameter at the central portion of the central shaft, one rotor 41 (41-1, 41-2) is provided on the substrate side of the casing and rotatably supported, and the other rotor 42 (42-1, 42-2) is provided on the front side of the casing, and their central axes are rotatably supported by ends 60A of the L-shaped members 60 and 60-2, and the other ends 60B of the L-shaped members 60 and 60-2 are rotatably supported on (a casing or a member attached to the casing). As the L-shaped member 60 rotates about the other end 60B, the distances between the rotors 41, 41-1 and 41-2 on one side and the rotors on the other side 42, 42-1 and 42-2 increase, even if the filling hose 61 or the plug 10 at its tip is engaged with any of the rotors 41, 41-1, 41-2, 42, 42-1, 42-2, the distance (interval) between one rotor 41 and the other rotor 42 increases, and the engagement between the filling hose 61 or the plug 10 at the tip thereof and the rotors 41 and 42 is released (no longer caught). In addition, when one rotor 41 (41-1, 41-2) and the other rotor 42 (42-1, 42-2) are closest to each other, a gap (4S-1, 4S-2) having the same width or diameter as the diameter of the filling hose 61 may suppress the swinging of the filling hose 61 and prevent the plug 10 of the safety joint 300 from being damaged.

In the present invention, the plurality of rotatable members 40 can be constituted by two rotatable members 43, 44, which are connected at their ends, the connected ends are relatively rotatable (through a hinge HG for instance). With this configuration, even if the filling hose 61 or the plug 10 at the tip thereof is engaged (caught) with one of the rotatable members 43 and 44, relative rotation of the rotatable members 43 and 44 allows the relative position of the rotatable members 43 and 44 to be changed, the interval (distance) between the rotatable members 43 and 44 is increased, and engagement between the members 43 and 44 and the filling hose 61 or the plug 10 at the tip thereof is released (no longer caught). When the plurality of rotatable members is composed of three rotatable members 45, 46 and 47, the same effect is obtained.

### BRIEF DESCRIPTION OF THE DRAWINGS

[Figure 1] An explanatory view showing an outline of the first embodiment of this invention.
[Figure 2] An explanatory side view showing the first embodiment of the present invention.
[Figure 3] A partially enlarged view showing a movable portion before a plug is separated from a socket in the first embodiment.
[Figure 4] A partially enlarged view showing the movable portion when the plug is separated from the socket in the first embodiment.
[Figure 5] An enlarged view showing the movable portion according to the first embodiment.
[Figure 6] An explanatory view showing an outline of the second embodiment of this invention.
[Figure 7] A partially enlarged view showing the movement of rollers when the plug passes therethrough.
[Figure 8] An explanatory perspective view showing two rotors having different shapes in the first modified example of the second embodiment.
[Figure 9] An explanatory view showing a state in which the rotors are closest to each other in the first modified example shown in Fig. 8.
[Figure 10] An explanatory perspective view showing the second modification of the second embodiment.
[Figure 11] An explanatory view showing a state in which the rotors are separated from each other in the second modification shown in Fig. 10.
[Figure 12] An explanatory perspective view of a state in which the rotors are closest to each other in the second modification shown in Figs. 10 and 11.
[Figure 13] An explanatory perspective view of a state in which the rotors are closest to each other in the second modification shown in Figs. 10 to 12.
[Figure 14] An explanatory view showing a main part of the third embodiment of this invention.
[Figure 15] An explanatory view showing a main part of the fourth embodiment of this invention.
[Figure 16] An explanatory view showing a shape of the plug in the embodiments of the invention.
[Figure 17] An explanatory view showing an outline of a hydrogen filling facility.
[Figure 18] An explanatory view showing a state in which a safety joint is attached to a hydrogen filling device.

### MODE FOR CARRYING OUT THE NVENTION

Hereinafter, embodiments of the present invention will be described with reference to the accompanying drawings. In order to prevent the illustration from being complicated, in Fig. 1, illustration of a main body of a casing 320 (a rectangular casing main body, excluding a substrate 80 of a hydrogen filling device 200 side) is omitted, and in Figs.2 to 15, illustration of the casing 320 (refer to Fig. 18) is omitted.

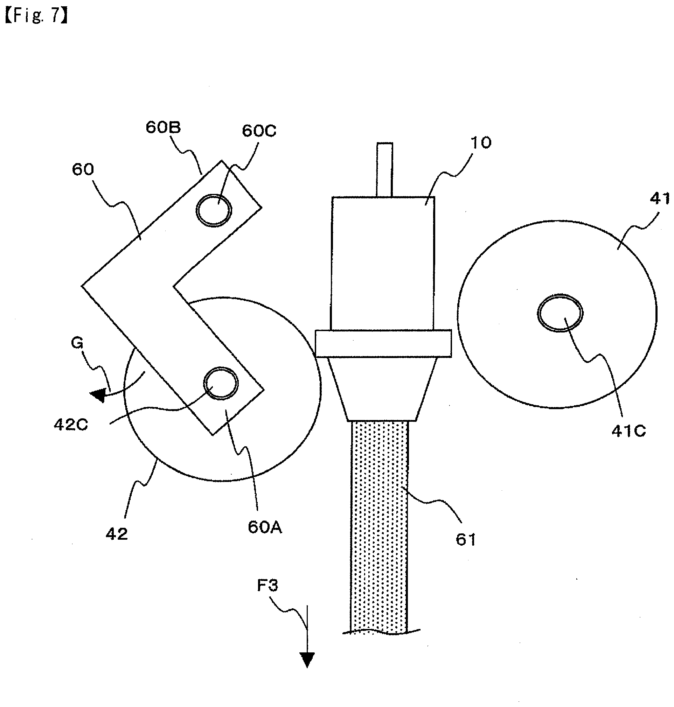

First, the first embodiment of the present invention will be described with reference to Figs. 1 to 5. In Fig. 1, a safety joint housing device 100 according to the first embodiment is provided with a safety joint 101 that includes a plug 10 (vehicle side member of the safety joint) connected to a filling hose 61, and a socket 20 which is a member of the hydrogen filling device 200 (see Figs. 17 and 18). The safety joint housing device 100 houses the safety joint 101 therein. The safety joint 101 has a function of separating the plug 10 from the socket 20 when a tensile load exceeding a predetermined level acts on the filling hose 61. For example, when a fuel cell vehicle (vehicle A) starts during a hydrogen filling operation, the plug 10 and the socket 20 are separated. No tensile force therefore acts on the hydrogen filling device 200. The safety joint housing device 100 also has the casing 320 (Fig. 18: not shown in Figs. 1 to 5) in which the plug 10 and the socket 20 are housed. The substrate 80 is provided on the main body side of the hydrogen filling device 200 of the casing 320. In Fig. 1, the plug 10 coupled to the socket 20 is indicated by a dashed lead line, and the plug 10 is covered by a plug accommodating portion of the socket 20. In Fig. 7, the plug 10 separated from the socket 20 is indicated by a solid line.

Hydrogen gas is supplied from the hydrogen filling device 200 (not shown in Fig. 1) to the socket 20 through a hydrogen gas pipe 21, then passes through the plug 10 and the filling hose 61 to the filling nozzle 202 (shown in Fig. 17) into a hydrogen tank (204 in Fig. 17) of the vehicle A. When the safety joint 101 separates, the filling hose 61 and the plug 10 move through a hollow portion of the guide member 70 and exit from a lower opening 320A of the casing 320 (Fig. 18). The guide member 70 restrains the filling hose 61 from wobbling and ensures that the plug 10 separates at a predetermined tensile load. A member 30 is provided in the lower opening 320A (see Figs. 3, 4, and 18, the lower end in Fig. 1) of the casing 320, and the member 30 contacts the plug 10 or the filling hose 61 separated from the socket 20. A rotatable front roller 35 is also arranged in the lower opening 320A (Fig. 18). The front roller 35 is rotatably supported in the front portion 51 of the support mechanism 50 by a shaft support portion 35A. The lower end of the front roller 35 is positioned below the lower edge 51E of the front portion 51.

Even if the plug 10 separates from the socket 20 and the filling hose 61 or the plug 10 contacts the deformable member 30 or the front roller 35, since the deformation of the deformable member 30 or the rotation of the front roller 35 prevents the filling hose 61 or the plug 10 from being engaged with the deformable member 30 or the front roller 35. The plug 10 and the filling hose 61 therefore smoothly slip out of the casing 320 (see Fig. 18: not shown in Figs. 1 to 5), easily move in the direction in which the tensile force acts, and the hydrogen filling device 200 will not fall over and break. The configuration and function of the deformable member 30 will be described later with reference to Figs. 2 to 5.

Here, the deformable member 30 and the front roller 35 are not provided on the back side of the substrate 80. When the vehicle A is to be filled with hydrogen, the vehicle A is parked in front of or to the side of the hydrogen filling device to fill hydrogen gas. No filling is performed to the vehicle A on the back side of the substrate 80, i.e., the back side of the hydrogen filling device. It is therefore not necessary to assume that the filling hose 61 or the plug 10 is pulled toward the substrate 80 side.

Instead of providing the deformable member 30 and the front roller 35 at the lower opening 320A (Figs. 3, 4, 18) of the casing 320, it is also conceivable that the cross-sectional area of the lower opening 320A is increased so that the filling hose 61 or the plug 10 cannot be locked (hooked) on the lower opening 320A, however, there is a desire to make the casing 320 (Fig. 18) fundamentally smaller. If the roller support mechanism 50 is not provided and the casing 320 is too large, the angle of the filling hose 61 pulled by the vehicle A becomes large with respect to the central axis (vertical axis) of the casing. This increases the horizontal force acting on the safety joint 300 (Fig. 18) and may prevent the plug from separating from the socket under a given tensile load. It is therefore desirable for the casing to be as small as possible and it is not reasonable to increase the lower opening 320A of the casing 320. It is conceivable to add a smooth radius to the tip of the member that constitutes the lower opening 320A of the casing 320. However, since the plate material that constitutes the casing has a small thickness, the curvature cannot be made smaller. In addition, the surface of the filling hose 61 has irregularities because an infrared fiber, a mesh, and the like are arranged around the outer periphery of the hose. It is therefore not possible to sufficiently prevent the plug 10 and the filling hose 61 from being caught in the lower opening 320A of the casing 320 simply by providing a radius.

In addition, the casing 320 suppresses the bending and curving of the separated filling hose 61 and prevents the plug 10 from falling outside the roller support mechanism 50 and the filling hose 61 from being caught in the roller support mechanism 50. Extending the member 70 to the vicinity of the roller support mechanism 50 allows the guide member 70 to serve as the casing 320. Although the casing 320 is provided in the embodiment, it is also possible to omit it.

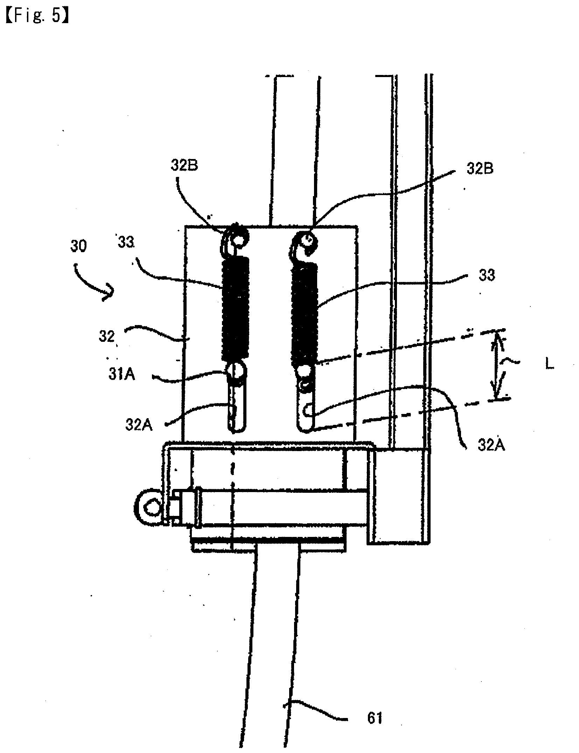

The configuration and function of the deformable member 30 will be described with reference to Figs. 2, 3 and 5 in addition to Fig. 1. The plug 10 is not shown in Figs. 3-5. The deformable member 30 is composed of two sets of a first plate member 31 and a second plate member 32. The first plate member 31 is arranged inside the second plate member 32 (inside the casing 320). The space between two first plate members 31 forms a passage through which the plug 10 separated from the socket 20 and the filling hose 61 pass at the lower opening 320A of the casing. In Figs. 1 to 5, the filling hose 61 extends through the passage. The second plate member 32 has a vertical portion 32V and a horizontal portion 32H (Fig. 3). The vertical portion 32V extends vertically (in Figs. 1-5) and is parallel to the first plate member 31. The horizontal portion 32H extends horizontally (in Figs. 1 to 5) outward (opposite to the first plate member 31) from the lower end of the vertical portion 32V. At the horizontal portion 32H, the second plate member 32 is fixed to the support mechanism 50 (Fig. 3), so that the second plate member 32 is fixed to the support mechanism 50. As shown in Fig. 2, the second plate member 32 is provided with a projection 32B near its upper end, and the projection 32B extend outward (on the side opposite to the first plate member 31: on the side apart from the first plate member 31). A long hole 32A having a length L (Fig. 5) extending in the longitudinal direction (vertical direction) from below the projection 32B to near the lower end of the vertical portion 32V of the second plate member 32 is formed.

The first plate member 31 is provided with a projection 31A at a position corresponding to the long holes 32A in the second plate member 32 arranged in parallel. The projection 31A penetrates the long hole 32A formed in the second plate member 32 and protrudes outward from the second plate member 32 (opposite side of the first plate member 31) (Figs. 2 to 4). The vicinity of the lower end of the first plate member 31 may be slightly inclined outward (toward the second plate member 32).

As shown in Figs. 2 to 4, the deformable member 30 has an elastic member 33 (e.g., a coiled spring) that connects the first plate member 31 and the second plate member 32. One end of the elastic member 33 is engaged with the projection 32B provided on the second plate member 32, and the other end of the elastic member 33 is engaged with the projection 31A provided on the first plate member 31. In Figs. 3 and 4, the elastic member 33 is represented by different display methods for the set of the first plate member 31 and the second plate member 32 on the right side and the set of the first plate member 31 and the second plate member 32 on the left side, however, there is no difference between both elastic members 33, and their configurations and functions are the same. The second plate member 32 is fixed to the support mechanism 50 as described above. On the other hand, the first plate member 31 is connected to the second plate member 32 by an elastic member 33. The elastic member 33 allows the first plate member 31 to move relative to the second plate member 32, and moves the first plate member 31 to the original position parallel to the second plate member 32 after the relative movement. The relative movement range of the first plate member 31 with respect to the second plate member 32 is the length L (Fig. 5) of the long hole 32A of the second plate member 32. In Figs. 3 and 4, the support mechanism 50 is provided with guide members 50A for controlling the relative movements of the first plate members 31.

In Fig. 3, which shows the state before the plug 10 is separated from the socket 20, no tensile force is acting on the filling hose 61 (connected to the plug 10), and the filling hose 61 extends into the space between the two first plate members 31. In the state shown in Fig. 3, in which no tensile force acts on the filling hose 61, the filling hose 61 is not in contact with the first plate member 31 (the first plate member 31 arranged on the right side in Fig. 3). Since the hose 61 does not press the first plate member 31, the first plate member 31 does not deform. On the other hand, in Fig. 4 showing the state in which the plug 10 is separated from the socket 20, a tensile force acts on the filling hose 61 in the direction of being pulled by the vehicle A (the direction of the arrow F1 in Fig. 1), and the filling hose 61 contacts the first plate member 31 (the first plate member 31 arranged on the right side in Fig. 4) and presses the first plate member 31. The first plate member 31 (the first plate member 31 arranged on the right side in Fig. 4) pressed by the filling hose 61 moves in the pressing direction (rightward in Fig. 4). At that time, the pressed first plate member 31 is sandwiched between the filling hose 61 and the guide member 50A, and therefore moves in the direction F1 in which the filling hose 61 is pulled. The movement of the first plate member 31 in the arrow F1 direction is permitted and regulated by the elastic deformation of the elastic member 33 and is guided by the long hole 32A of the second plate member 32 into which the projection 31A of the first plate member 31 is inserted. At this time, the right movement range of the first plate member 31 is restricted by the guide member 50A arranged in the support mechanism 50, and the first plate member 31 is properly guided in the lower right direction.

In Fig. 4, even if the filling hose 61 (or the plug 10) engages (or gets caught in) the first plate member 31, the elastic member 33 elastically deforms (extends), thereby causing the first plate member 31 to move relative to the second plate member 32, and moves to a position where the engagement state (hooked state) with the filling hose 61 (or the plug 10) is released (position where it is no longer hooked). As a result, the state in which the filling hose 61 (or the plug 10) is engaged (hooked) with the first plate member 31 at the lower opening 320A of the casing 320 is released, and the filling hose 61 (or the plug 10) can exit in the direction (the arrow F1 direction) pulled by the vehicle A. No tensile force therefore acts on the hydrogen filling device 200, and the hydrogen filling device 200 can be prevented from being overturned and damaged. After the filling hose 61 and the plug 10 pass through the lower opening of the casing 320, the elastic repulsive force (contraction) of the elastic member 33 causes the first plate member 31 to return to its original position parallel to the second plate member 32 (the position shown in Fig. 3).

Although the plug 10 is separated from the socket 20, and the filling hose 61 is pulled by the vehicle A in the horizontal direction (the direction of the arrow F1) in Fig. 1, there is also a case where the filling hose 61 is pulled in a front direction (the direction of the arrow F2). When the filling hose 61 is pulled in the direction of the arrow F2 by the vehicle A, the plug 10 or the filling hose 61 contacts the front roller 35 rather than the deforming member 30. Contact with the plug 10 or the filling hose 61 rotates the front roller 35 so that the plug 10 or the filling hose 61 moves without engaging the casing opening or the front roller 35, smoothly exits the casing, and moves easily in the direction that the pulling force acts.

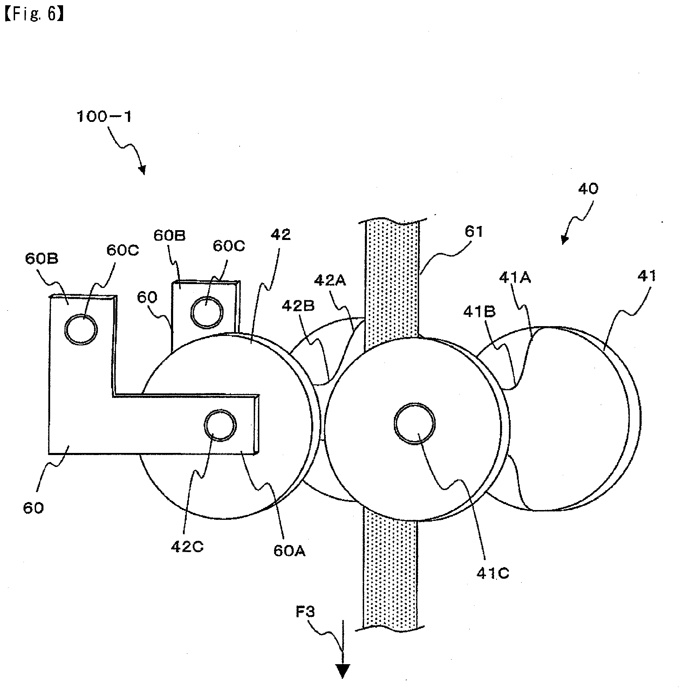

Next, the second embodiment of the present invention will be described mainly with reference to Figs. 6 and 7. The second embodiment will be described with a focus on the differences from the first embodiment. Figures. 6 and 7 mainly show the rotatable member 40, which is a main configuration of the safety joint housing device 100-1 according to the second embodiment. The safety joint housing device 100-1 houses a safety joint 101 (see Fig. 1) including the plug 10 connected to the filling hose 61 and the socket 20 which is a member of the hydrogen filling device 200 side. Although not shown in Figs. 6 and 7, the safety joint housing device 100-1 has the casing 320 (see Fig. 18) in which the plug 10 and the socket 20 are housed. The substrate 80 (Fig. 1) is provided on the hydrogen filling device 200 side of the casing 320. When the safety joint 101 separates, the filling hose 61 and the plug 10 move through the hollow portion of the guide member 70 (see Fig. 1) to exist from the lower opening 320A (refer to Figs. 3 and 4) of the casing 320 shown in Fig. 18.

The lower opening 320A (Figs. 3, 4, 18) of the casing 320 (Fig. 18) includes two rotors 41, 42 shown in Fig. 6 as the plurality of rotatable members 40. The rotors 41 and 42 are entirely shaped like Japanese hand drums, and have large diameters at both ends 41A and 42A of the center shafts (rotating shafts) and small diameters at central portions 41B and 42B of the center shafts. The filling hose 61 and the plug 10 pass between the two rotors 41 and 42 and exit from the lower opening 320A of the casing 300. In Fig. 6, the filling hose 61 extends between the two rotors 41 and 42. The rotor 41 is provided on the substrate 80 side of the casing (on the right side in Figs. 6 and 7; the substrate 80 is not shown in Figs. 6 and 7), and its central axis (rotating shaft) is rotatably supported via a support member (not shown) on the substrate 80 side by the shaft support portion 41C. On the other hand, the rotor 42 is provided on the front side (left side in Figs. 6 and 7) of the casing 320 (not shown in Figs. 6 and 7), and its central axis (rotating axis) is rotatably supported by a shaft support portion 42C at an end 60A of the L-shaped member 60. The other end 60B of the L-shaped member 60 is rotatably supported on the front side of the casing 320 by a shaft support portion 60C via a support member (not shown) toward the casing 320 side. Rotation of the L-shaped member 60 about the shaft support portion 60C with respect to the front side of the casing 320 allows the rotor 42 rotatably supported by the one end 60A of the L-shaped member 60 to change its position relative to the rotor 41, and the distance between rotors 41 and 42 can be changed.

In the state shown in Fig. 6, the plug 10 (see Fig. 1) is not separated from the socket 20, and the filling hose 61 is positioned between the two rotors 41 and 42. When the plug 10 is separated from the socket 20 and the filling hose 61 tries to get out of the gap between the two rotors 41 and 42, the filling hose 61 is pushed out of the area where the diameters of the two rotors 41 and 42 are small. That is, the filling hose 61 smoothly moves to the area 41B and 42B, at central portions in the central axial direction, where the gap between the two rotors 41 and 42 is large. When the filling hose 61 contacts the two rotors 41 and 42, the two rotors 41 and 42 rotate, the filling hose 61 can escape in the direction of being pulled by the vehicle A (the direction of the arrow F3).

Referring to Fig. 7, the state in which the plug 10 is separated from the socket 20 will be described. Even if the plug 10 to which the filling hose 61 is connected reaches between the two rotors 41 and 42 and the plug 10 (or the filling hose 61) engages with one of the rotors 41 and 42 when the plug 10, which has a larger diameter than the filling hose 61, slips out of the gap between the rotors 41 and 42, the L-shaped member 60 that rotatably supports the rotor 42 rotates about the end portion 60B in the direction of the arrow G. As the L-shaped member 60 rotates in the direction of the arrow G, the relative position of the rotors 41 and 42 change, the interval between the rotors 41 and 42 increases, and the plug 10 does not engage with the rotors 41 and 42. The plug 10 and the filling hose 61 can escape from the gap between the rotors 41 and 42 in the direction of being pulled by the vehicle A (the direction of the arrow F3), thereby preventing the hydrogen filling device 200 from being pulled. In addition, in the second embodiment shown in Figs. 6 and 7, the front roller shown in the first embodiment is not provided. Other configurations and effects of the second embodiment shown in Figs. 6 and 7 are the same as those of the first embodiment shown in Figs. 1 to 5.

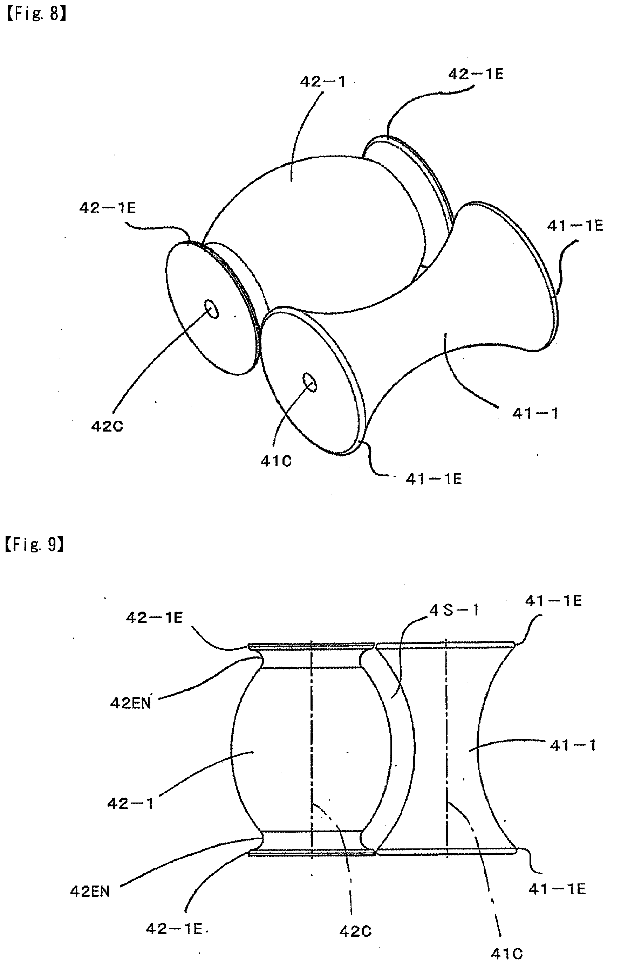

The first modification of the second embodiment will be described with reference to Figs. 8 and 9. In the second embodiment shown in Figs. 6 and 7, the two rotors 41 and 42 have the same shape, but in the first modification shown in Figs. 8 and 9, their shapes are different from each other. In Figs. 8 and 9, a rotor 41-1 has substantially the same shape as the rotors 41 and 42 in the second embodiment shown in Fig. 7, having a large diameter at both ends of a central shaft (rotating shaft) 41C and a small diameter at the center of the central shaft 41C. On the other hand, a rotor 42-1 has a shape different from that of the rotor 41-1 (a shape complementary to that of the rotor 41-1), having a small diameter at both ends of the central shaft (rotating shaft) 41C and a large diameter at the center of the central shaft 41C. However, as clearly shown particularly in Fig. 9, the rotor 42-1 has the smallest diameter at portions (minimum diameter portion) 42EN near both ends in the direction of the central axis 42C, and the diameter increases toward both ends 42-1E.

As shown in Fig. 9, when the rotor 41-1 and the rotor 42-1 are closest to each other, the end 41-1E (flange) of the rotor 41-1 and the end portion 42-1E (flange) abut with each other. As described above, since the rotor 42-1 has the smallest diameter at the minimum diameter portion 42EN, and the diameter increases from the minimum diameter portion 42EN toward both ends 42-1E, as shown in Fig. 9, when the end portion 41-1E of the rotor 41-1 and the end portion 42-1E of the rotor 42-1 come into contact with each other, a gap 4S-1 is formed. Setting the width of the gap 4S-1 to be the same as the diameter of the filling hose 61, the filling hose 61 is sandwiched between the rotors 41-1 and 42-1 in the state shown in Fig. 9, it is possible to prevent the plug 10 of the safety joint 300 from being damaged by the moment caused by the swinging of the filling hose 61. Other configurations and effects of the modification shown in Figs. 8 and 9 are the same as those of the second embodiment shown in Figs. 6 and 7.

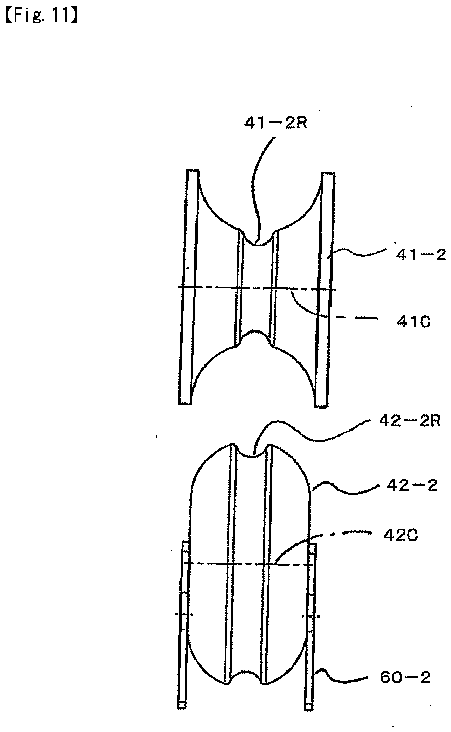

Like the first modification, the shapes of the pair of rotors 41-2 and 42-2 are different in the second modification shown in Figs. 10 to 13 as well. As in the first modification, the rotor 41-2 in the second modification has substantially the same shape as the rotors 41 and 42 (Figs. 6 and 7) in the second embodiment, having a large diameter at both ends of the central axis (rotational axis) 41C and a small diameter at the central portion of central shaft 41C. On the other hand, the rotor 42-2 has a shape different from that of the rotor 41-1, and is complementary to the other rotor 41-2, similar to the rotor 42-1 (Figs. 8 and 9) in the first modification, the diameter of the center shaft (rotating shaft) 42C is small at both ends and the diameter of the central portion of the center shaft 41C is large. In the second modification, as shown in Fig. 11, groove-like regions 41-2R and 42-2R having a small diameter are formed in the center of the pair of rotors 41-2 and 42-2 in the central axial direction, and the groove-like regions 41-2R and 42-2R have a semicircular cross-sectional shape.

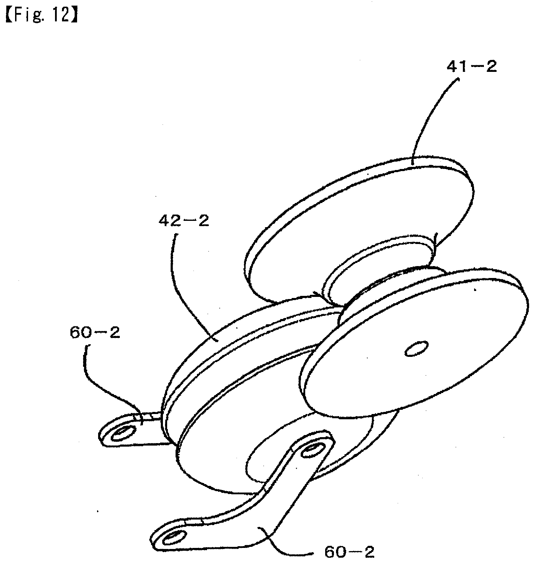

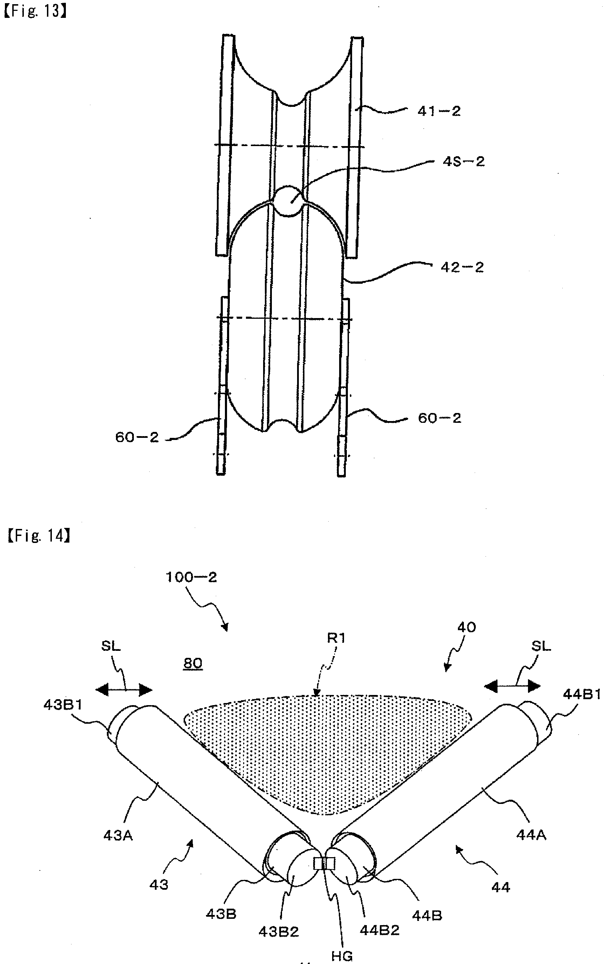

In the second modification, when the pair of rotors 41-2 and 42-2 are closest to each other and are in contact with each other (the states shown in Figs. 12 and 13), although the rotors 41-2 and 42-2 having shapes complementary to each other are in close contact, the groove-shaped regions 41-2R and 42-2R having a semicircular cross section form a circular space 4S-2 (clearance). If the diameter of the gap 4S-2 is set to be the same as that of the filling hose 61, in the state shown in Figs. 12 and 13, holding the filling hose 61 in the space 4S-2 formed by the rotors 41-1 and 42-1 prevents the plug 10 of the safety joint 300 from being damaged by the moment caused by the swinging of the filling hose 61. Other configurations and effects of the second modification shown in Figs. 10 to 13 are the same as those of the second embodiment shown in Figs. 6 to 9 and the first modification thereof.

The third embodiment of the present invention will be described with reference to Fig. 14. The third embodiment is different from the second embodiment in a rotatable member 40 located in the lower opening 320A (see Figs. 3, 4 and 18) of the casing 320 (Fig. 18). The description of the third embodiment shown in Fig. 14 will focus on the differences from the second embodiment shown in Figs. 6 and 7.

A safety joint housing device 100-2 according to the third embodiment houses the safety joint 101 (see Fig. 1) including the plug 10 and the socket 20. In Fig. 14, two rotatable members 43 and 44 are provided as a plurality of rotatable members 40 in the lower opening 320A (see Figs. 3, 4 and 18) of the casing 320 (Fig. 18). The two rotatable members 43 and 44 each have hollow rollers 43A and 44A and central shafts 43B and 44B (rotating shafts), and the hollow rollers 43A and 44A are configured to be rotatable about the central shafts 43B and 44B, respectively. One ends 43B1 and 44B1 of the central shafts 43B and 44B of the two rotatable members 43 and 44 are connected to the substrate 80 via supporting members not shown. The ends 43B1 and 44B1 of the central shafts 43B and 44B are slidably supported on the substrate 80 in the direction of the arrow SL in Fig. 14. The other ends 43B2, 44B2 of the central shafts 43B, 44B of the rotatable members 43, 44 are rotatably connected to each other by a hinge HG.

In Fig. 14, the plug 10 (see Fig. 1) and the filling hose 61 (Fig. 1) separated from the socket 20 (Fig. 1) pass through a region R1 surrounded by the rotatable members 43, 44 and the substrate 80 and move in a direction to be pulled by the vehicle A. When the filling hose 61 and the plug 10 pass through the region R1, even if they are engaged (caught) with any of the rotatable members 43, 44 (hollow rollers 43A, 44A), the rotatable members 43, 44 relatively rotate to cause one ends 43B1 and 44B1 of the rotatable members 43 and 44 to slide relative to the substrate 80 in the direction of the arrow SL, which changes relative positions of the rotatable members 43 and 44, and varies (e.g. lengthens) the distance between the rotatable members 43 and 44. As a result, the engagement (with the filling hose 61 or the plug 10 at its tip) is disengaged. In addition, rotations of the hollow rollers 43A, 44A of the rotatable members 43, 44 also contribute to the disengagement of the filling hose 61 or the plug 10 from the rotatable members 43, 44. The filling hose 61 or the plug 10 disengaged from the rotary members 43, 44 passes through the region R1 and comes out in the direction of being pulled by the vehicle A, thereby preventing the hydrogen filling device 200 from being pulled. Other configurations and effects of the third embodiment shown in Fig. 14 are the same as those of the embodiment shown in Figs. 1 to 7.

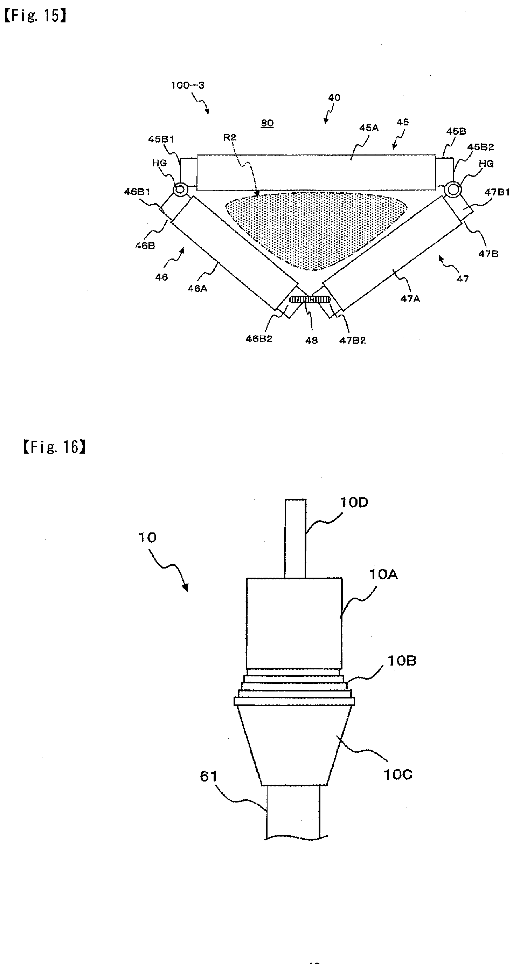

The fourth embodiment of the present invention will now be described with reference to Fig. 15. In the third embodiment shown in Fig. 14, two rotatable members 43 and 44 are provided as a plurality of rotatable members 40 provided in the lower opening 320A of the casing 320. In contrast, in the fourth embodiment, three rotatable members 45, 46, 47 are provided. A safety joint housing device 100-3 of the fourth embodiment accommodates the safety joint 101 including the plug 10 and the socket 20.

In Fig. 15, three rotatable members 45, 46 and 47 are provided as a plurality of rotatable members 40 in the lower opening 320A of the casing 320. The three rotatable members 45, 46, 47 each have hollow rollers 45A, 46A, 47A and center shafts 45B, 46B, 47B (rotating shafts). The hollow rollers 45A, 46A, 47A are configured to be rotatable with respect to the center shafts 45B, 46B, 47B. The center shaft 45B of the rotatable member 45 is fixed to the substrate 80 (Fig. 1) via supporting members (not shown), for example, near both ends thereof. Further, ends 46B1 and 47B1 of the central shafts 46B and 47B of the rotatable members 46 and 47 are respectively connected to both ends 45B1 and 45B2 of the central shaft 45B of the rotatable member 45 by hinges HG so as to be relatively rotatable. The other ends 46B2, 47B2 of the central shafts 46B, 47B of the rotatable members 46, 47 are connected by an elastic member 48 (for example, a coiled spring).

In Fig. 15, the unillustrated plug 10 and the filling hose 61 separated from the socket 20 pass through the area R2 surrounded by the rotatable members 45, 46, 47 and move in a direction to be pulled by the vehicle A. Since the rotatable members 45, 46 and the rotatable members 45, 47 are rotatably connected to each other by the hinge HG, the relative positions of the rotatable members 45, 46 and the relative positions of the rotatable members 45, 47 can be varied to vary the angle connected between the rotatable members 45, 46 and between the rotatable members 45, 47. Further, since the rotatable members 46 and 47 are connected at their ends by the elastic member 48, the interval between the rotatable members 46 and 47 can be lengthened. Therefore, even if any one of the hollow rollers 45A, 46A, 47A of the rotatable members 45, 46, 47 is engaged when the filling hose 61 and the plug 10 pass through the region R2, the rotatable members 45, 46, 47 are able to moved out of engagement with the filling hose 61 or the plug 10 and to be disengaged.

Rotations of the hollow rollers 45A, 46A, 47A of the rotatable members 45, 46, 47 also contribute to disengagement of any of the hollow rollers 45A, 46A, 47A from the filling hose 61 or the plug 10. The filling hose 61 or the plug 10 disengaged from the rotatable members 45, 46, 47 exits in a direction of being pulled by the vehicle A through the region R2. As a result, the hydrogen filling device 200 is prevented from being pulled. When the filling hose 61 or the plug 10 leaves the region R2, the elastic repulsive force of the elastic member 48 causes the rotatable members 46, 47 to return to their original positions. Other configurations and effects of the fourth embodiment shown in Fig. 15 are the same as those of the embodiments shown in Figs. 1 to 14.

Figure 16 shows a modification of the plug 10 of the illustrated embodiments, and the plug 10 in Fig. 16 has a body portion 10A, an intermediate portion 10B, a tapered portion 10C, and a rod 10D on the connection side with the socket. The tapered portion 10C gradually decreases in diameter from the intermediate portion 10B toward the lower end (lower end in Fig. 16), and the filling hose 61 is connected to the lower end of the tapered portion 10C. By constructing the filling hose side of the plug 10 with the tapered portion 10C, there is no stepped portion on the plug 10 side and the filling hose 61 side, and even if the plug 10 comes into contact with the members 30, 40, 44, 45 at the lower opening 320A of the casing 320, the plug 10 is prevented from being engaged with the members due to the tapered portion 10C.

It should be noted that the illustrated embodiments are merely examples and are not intended to limit the technical scope of the present invention.

### DESCRIPTION OF THE REFERENCE NUMERALS

10 plug (vehicle side member of safety joint)
20 socket (member on filling device side of safety joint)
30 deformable member
31 first plate member
31A projection
32 second plate member
32A long hole
32B projection
33 elastic member (for example, coiled spring)
40 rotatable member (roller etc.)
41, 41-1, 41-2, 42, 42-1, 42-2 rotors
4S-1, 4S-2 gaps
43, 44, 45, 46, 47 rotatable members
50 support mechanism
60 L-shaped member
60A one end of L-shaped member
60B the other end of L-shaped member
61 filling hose
80 substrate
100 safety joint housing device
101 safety joint
200 hydrogen filling device
320 casing
320A lower opening of casing
HG hinge

## Claims

1. A safety joint housing device for housing a safety joint including a plug connected to a filling hose and a socket provided in a filling device, the plug and the socket separating from each other when a tensile load exceeding a predetermined level is applied, said safety joint housing device comprising:
a casing;
a substrate attached to the casing on a main body side of the f illing device; and
a member that is provided at a lower opening of the casing and deforms when in contact with the plug or the filling hose.

2. The safety joint housing device as claimed in claim 1, wherein said deformable member includes two pairs of first and second plate members, the first plate member positioned inside the second plate member;
an elastic member is provided to connect the first plate and the second plate, the elastic member allows the first plate to move relative to the second plate, and after the relative movement, the elastic member allows the first plate to be restored to a position parallel to the second plate;
the second plate member is fixed to a support mechanism that supports the deformable member on the casing, and the second plate member is formed with a long hole extending in its longitudinal direction and a projection projecting outward;
a projection protruding outward is formed on the first plate member, and the projection of the first plate member penetrates the long hole of the second plate member; and
the elastic member connects the projections of the first and second plate members.

3. A safety joint housing device for housing a safety joint including a plug connected to a filling hose and a socket provided in a filling device, the plug and the socket separating from each other when a tensile load exceeding a predetermined level is applied, said safety joint housing device comprising:
a casing;
a substrate attached to the casing on a main body side of the filling device; and
a plurality of rotatable members that is provided at a lower opening of the casing, relative positions of the rotatable members being changeable.

4. The safety joint housing device as claimed in claim 3, wherein said plurality of rotatable members includes two Japanese hand drum-shaped rotors with a large diameter at both ends of a central shaft and a small diameter at a center of the central shaft, one of the rotors rotatably mounted on the substrate side of the casing, the other rotor is provided on a front side of the casing, and its central axis is rotatably supported on one end of an L-shaped member, the other end of the L-shaped member is rotatably supported, and rotation of the L-shaped member around the other end thereof changes the distance between the one rotor and the other rotor.

5. The safety joint housing device as claimed in claim 3, wherein said plurality of rotatable members includes a Japanese hand drum-shaped rotor having a large diameter at both ends of a central shaft and a small diameter at a center of the central shaft, and a rotor having a small diameter at both ends of a central shaft and having a large diameter at a center of the central shaft, one of the rotors rotatably mounted on the substrate side of the casing, the other rotor is provided on a front side of the casing, its central axis is rotatably supported on one end of an L-shaped member, the other end of the L-shaped member is rotatably supported, and rotation of the L-shaped member around the other end thereof changes the distance between the one rotor and the other rotor, a gap is formed when the one rotor and the other rotor come closest to each other, and the gap has the same width or diameter as a diameter of the filling hose.

6. The safety joint housing device as claimed in claim 3, wherein said plurality of rotatable members includes two rotatable members, said two rotatable members being connected at their axial ends and the connected ends being rotatable relative to each other.

7. The safety joint housing device as claimed in claim 3, wherein said plurality of rotatable members includes three rotatable members, one of the rotatable members fixed to the substrate side and the other two members are connected at their respective ends so as to be relatively rotatable.
